# EUROPÄISCHE PATENTANMELDUNG

(11) **EP 4 455 510 A1**
(43) Veröffentlichungstag der Anmeldung: **30.10.2024**
(21) Anmeldenummer: 24172087.9
(22) Anmeldetag: 24.04.2024
(51) Int. Cl.: F16H 3/14, F16H 3/60, H02K 16/00, B60K 6/445, F16H 3/12, F16H 37/04

(54) **REVERSIERGETRIEBE**

(30) Priorität: 28.04.2023 AT 503262023
(71) Anmelder: AVL Deutschland GmbH, 55252 Mainz-Kastel (DE)
(72) Erfinder: Woopen, Thomas, 51570 Windeck (DE); Gödderz, Benjamin, 41540 Dormagen (DE)
(74) Vertreter: Babeluk, Michael

(57) **Zusammenfassung**

Die Erfindung betrifft ein Reversiergetriebe (1) für ein Kraftfahrzeug mit einer Eingangswelle (2) und einer Ausgangswelle (3), wobei zwischen der Eingangswelle (2) und der Ausgangswelle (3) zwei Antriebspfade (4, 5) mit entgegengesetzten Antriebsdrehrichtungen ausgebildet sind, welche Antriebspfade (4, 5) durch ein erstes Steuerglied (6) und ein zweites Steuerglied (7) jeweils aktivierbar oder deaktivierbar sind, wobei jedes Steuerglied (6, 7) zumindest einen ersten und einen zweiten Betriebszustand aufweist und im ersten Betriebszustand jeweils zwei Getriebeteile (1a, 1b) des Reversiergetriebes (1) miteinander drehverbunden und im zweiten Betriebszustand voneinander getrennt sind, wobei zur Umkehrung der Antriebsrichtung im zweiten Antriebspfad (5) ein - ein Antriebselement (8a) und ein Abtriebselement (8b) aufweisendes - Reversierglied (8) so angeordnet ist, dass entweder das Antriebselement (8a) mittels des zweiten Steuergliedes (7) mit der Eingangswelle (2) drehverbindbar und das Abtriebselement (8b) mit der Ausgangswelle (3) drehfest verbunden ist, oder das Antriebselement (8a) mit der Eingangswelle (2) drehfest verbunden und das Abtriebselement (8b) mittels des zweiten Steuergliedes (7) mit der Ausgangswelle (3) drehverbindbar ist.

Um auf einfache Weise ein kompaktes dediziertes Hybridgetriebe zu entwickeln ist vorgesehen, dass zumindest ein Steuerglied (7) durch eine elektrische Maschine (70) gebildet ist.

## Beschreibung

Die Erfindung betrifft ein Reversiergetriebe für ein Kraftfahrzeug mit einer Eingangswelle und einer Ausgangswelle, wobei zwischen der Eingangswelle und der Ausgangswelle zwei - insbesondere alternative - Antriebspfade mit entgegengesetzten Antriebsdrehrichtungen ausgebildet sind, welche Antriebspfade durch ein erstes Steuerglied und ein zweites Steuerglied - insbesondere alternativ - jeweils aktivierbar oder deaktivierbar sind, wobei jedes Steuerglied zumindest einen ersten und einen zweiten Betriebszustand aufweist und im ersten Betriebszustand jeweils zwei Getriebeteile des Reversiergetriebes miteinander drehverbunden und im zweiten Betriebszustand voneinander getrennt sind, wobei der erste Betriebszustand des ersten Steuergliedes der Aktivierung eines ersten Antriebspfades, der erste Betriebszustand des zweiten Steuergliedes der Aktivierung des zweiten Antriebspfades, der zweite Betriebszustand des ersten Steuergliedes der Deaktivierung des ersten Antriebspfades und der zweite Betriebszustand des zweiten Steuergliedes der Deaktivierung des zweiten Antriebspfades zugeordnet sind. Zur Umkehrung der Antriebsrichtung ist im zweiten Antriebspfad ein - ein Antriebselement und ein Abtriebselement aufweisendes - Reversierglied so angeordnet, dass entweder das Antriebselement mittels des zweiten Steuergliedes mit der Eingangswelle drehverbindbar und das Abtriebselement mit der Ausgangswelle drehfest verbunden ist, oder das Antriebselement mit der Eingangswelle drehfest verbunden und das Abtriebselement mittels des zweiten Steuergliedes mit der Ausgangswelle drehverbindbar ist.

Weiters betrifft die Erfindung ein Verfahren zum Betreiben eines Reversiergetriebes mit zwei zwischen einer Eingangswelle und einer Ausgangswelle insbesondere alternativ aktivierbaren Antriebspfaden mit entgegengesetzten Antriebdrehrichtungen, wobei für die Aktivierung des ersten Antriebspfades das erste Steuerglied in einen die Eingangswelle und die Ausgangswelle drehfest verbindenden ersten Betriebszustand und das zweite Steuerglied in einen den ersten Getriebeteil und den zweiten Getriebeteil des Reversiergetriebes trennenden zweiten Betriebszustand gebracht wird, und wobei für die Aktivierung des zweiten Antriebspfades das erste Steuerglied in einen die Eingangswelle und die Ausgangswelle trennenden zweiten Betriebszustand und das zweite Steuerglied in einen den ersten Getriebeteil und den zweiten Getriebeteil des Reversiergetriebes drehfest verbindenden ersten Betriebszustand gebracht wird.

Die DE 10 2016 2007 52 A1 beschreibt ein hydrostatisches Getriebe mit elektrohydraulisch aktivierter Reversiereinheit mit zwei Hauptfahrkupplungen. Kuppelnde Reversiergetriebe nach DE 10 2016 2007 52 A1 verfügen über zwei vergleichbare Hauptfahrkupplungen, eine Vorwärtskupplung sowie eine Rückwärtskupplung. Der Rückwärtskupplung ist zum Abtrieb dabei eine Zwischenzahnradstufe mehr nachgeschaltet, als es bei der Vorwärtskupplung der Fall ist, so dass sich je nach geschalteter Kupplung ein entgegengesetzter Drehsinn am Abtrieb ergibt. Die Drehzahl am Eingang wird dabei als drehrichtungsstarr angesehen. Im Zuge eines Reversiervorganges wird die aktive Kupplung geöffnet und gleichzeitig die jeweils andere geschlossen. Die nun geschlossene Kupplung greift somit in den Leistungsfluss ein, wodurch im Betrieb eine Umkehr der Fahrtrichtung vollzogen werden kann, ohne das Fahrzeug zuvor in den Stillstand zu bringen oder über die Fahrzeugbremsen abzubremsen.

Aus der DE 1862674 U ist ein als bremsendes Planetengetriebe ausgebildetes Reversiergetriebe bekannt. Bei bremsenden Reversiergetrieben wird meist ein sogenanntes Plus-Planetengetriebe, also ein Planetengetriebe mit zwei in Reihe geschalteten Planetensätzen eingesetzt. Der Antrieb erfolgt dabei beispielhaft über einen Planetenträger, während der Abtrieb über ein zentrales Sonnenrad erfolgt. Das Reversiergetriebe weist eine beispielsweise elektrohydraulisch betätigbare Hauptfahrkupplung auf, welche bei Vorwärtsfahrt geschlossen und bei Rückwärtsfahrt geöffnet ist. Zur Durchführung einer Vorwärtsfahrt werden durch Schließen der Hauptfahrkupplung die Eingangswelle und die Ausgangswelle miteinander verbunden und das Sonnenrad mit dem Planetenträger drehfest verbunden, sodass das Planetengetriebe in einen Blockumlauf gezwungen wird. Das Hohlrad des Platenrades dreht bei Vorwärtsfahrt mit der Eingangsdrehzahl frei mit. Durch Öffnen der Hauptfahrkupplung und Abbremsen bzw. Blockieren des Hohlrades erfolgt eine Drehrichtungsumkehr der Ausgangswelle. Zur Durchführung einer Rückwärtsfahrt wird die Hauptfahrkupplung geöffnet und gleichzeitig eine Bremse, beispielsweise elektrohydraulisch, geschlossen, welche das bislang frei mitdrehende Hohlrad gegen das Getriebegehäuse bis zum Stillstand abbremst. Der Planetensatz des Reversiergetriebes ist dabei so aufgebaut, dass bei stillstehendem Hohlrad ungefähr eine Übersetzung von i=-1 zwischen Eingangswelle und Ausgangswelle erreicht wird. Im Betrieb kann somit eine Umkehr der Fahrtrichtung vollzogen werden, ohne das Fahrzeug zuvor in den Stillstand zu bringen oder über die Fahrzeugbremsen abzubremsen.

Die Veröffentlichungen DE 10 2010 029 597 A1, EP 2 577 097 B1 und WO 2017/029174 A1 zeigen weitere Getriebeanordnungen mit jeweils einer durch ein Planetengetriebe ausgebildeten Reversiereinheit.

Aus der DE 39 05 216 A1 und der DE 29 29 095 A1 sind elektrisch steuerbare Hysteresekupplungen (Schlupfkupplungen) bekannt. Hysteresekupplungen und - bremsen werden zur Verbindung zweier Wellenteile, insbesondere zur Zugkraftregelung eingesetzt. Derartige Hysteresekupplungen und -bremsen weisen jeweils einen Erregerteil und Hystereseteil als Antriebs- und Abtriebselemente auf und sind im Drehmoment regelbar und abschaltbar.

Aufgabe der Erfindung ist es auf einfache Weise ein kompaktes dediziertes Hybridgetriebe (DHT=dedicated hybrid transmission) zu entwickeln.

Ausgehend von einem Reversiergetriebe der eingangs genannten Art wird dies erfindungsgemäß dadurch erreicht, dass zumindest ein Steuerglied durch eine elektrische Maschine gebildet ist.

Die Funktion der elektrischen Maschine geht über die reine Schaltfunktion eines als konventionelle Reibungskupplung ausgeführten Steuergliedes weit hinaus. Durch den Einsatz einer elektrischen Maschine an Stelle einer Reibungskupplung wird das Reversiergetriebe zu einem dediziertes Hybridgetriebe. Neben der reinen schlupflosen oder schlupfbehafteten Drehmomentübertragung kann ein zusätzliches positives oder negatives Antriebsmoment aufgebracht werden.

Vorzugsweise ist das erste Steuerglied wie bisher durch eine Wellenkupplung - beispielsweise eine Reibungskupplung - mit zwei miteinander kuppelbaren Kupplungsteilen gebildet, wobei ein erster Kupplungsteil mit der Eingangswelle und ein zweiter Kupplungsteil mit der Ausgangswelle drehfest verbunden ist. Das zweite Steuerglied dagegen ist durch die elektrische Maschine gebildet, welche zwei konzentrisch angeordnete Maschinenteile aus der Gruppe Rotor und Stator aufweist, wobei ein erster Maschinenteil - vorzugsweise ein Rotor der elektrischen Maschine - mit einem ersten Getriebeteil des Reversiergetriebes und ein zweiter Maschinenteil mit einem zweiten Getriebeteil des Reversiergetriebes drehfest verbunden ist. Abhängig von der jeweiligen Ausführungsvariante kann der zweite Getriebeteil ein samt dem zweiten Maschinenteil drehender oder ein feststehender Teil sein, wobei der feststehende zweite Maschinenteil einen Stator der elektrischen Maschine bildet.

Um nach erfolgter Synchronisation des ersten und des zweiten Getriebeteiles den Fahrzustand ohne elektrische Leistung aufrechterhalten zu können ist es vorteilhaft, wenn dass der erste Getriebeteil und/oder erster Maschinenteil durch eine mechanische Koppelvorrichtung mit dem zweiten Getriebeteil und/oder dem zweiten Maschinenteil - vorzugsweise bei synchroner Drehzahl - in zumindest einem Betriebsbereich des Kraftfahrzeuges miteinander verbindbar ist/sind. Dies ermöglicht es die Verluste zu minimieren. Die Koppelvorrichtung kann durch eine einfache Klauenkupplung oder dergleichen gebildet sein.

In einer bevorzugten Ausführungsvariante der Erfindung ist das Antriebselement des Reversiergliedes mittels des zweiten Steuergliedes mit der Eingangswelle drehverbindbar und das Abtriebselement des Reversiergetriebes mit der Ausgangswelle drehfest verbunden. Alternativ kann aber auch das Antriebselement des Reversiergliedes mit der Eingangswelle drehfest verbunden und das Abtriebselement des Reversiergetriebes mittels des zweiten Steuergliedes mit der Ausgangswelle drehverbindbar sein.

Eine Ausführungsvariante der Erfindung sieht vor, dass das Reversiergetriebe als Umkehrstirnradgetriebe ausgebildet ist, wobei das Reversierglied durch eine Reversierstirnradanordnung mit einer ungeraden Anzahl von in Reihe antriebsmäßig nacheinander angeordneten und miteinander in Zahneingriff stehenden Stirnrädern gebildet ist, wobei das Antriebselement und das Abtriebselement durch Endstirnräder gebildet sind, welche mit zumindest einem zwischen den beiden Endstirnrädern angeordneten Zwischenzahnrad im Zahneingriff stehen. Dabei kann der erste Getriebeteil durch das Antriebselement und der zweite Getriebeteil durch das Abtriebselement des Reversiergliedes gebildet sein. Das über das zweite Steuerglied steuerbare Reversierglied dient zur Realisierung einer Rückwärtsfahrt. Für die Vorwärtsfahrt kann die Eingangswelle mittels des ersten Steuergliedes beispielsweise über eine Vorwärtsstirnradanordnung mit gerader Anzahl an Stirnrädern mit der Ausgangswelle verbunden werden.

Dabei ist günstiger Weise der - vorzugsweise einem Vorwärtsgang zugeordnete - erste Antriebspfad durch drehfestes Verbinden der Eingangswelle und der Ausgangswelle durch das erste Steuerglied und gleichzeitiges vollständiges oder teilweises Trennen des Antriebselementes des Reversiergliedes von der Eingangswelle durch das zweite Steuerglied gebildet, und der - vorzugsweise einem Vorwärtsgang zugeordnete - zweite Antriebspfad durch vollständiges oder teilweises drehfestes Verbinden der Eingangswelle mit dem Antriebselement des Reversiergliedes durch das zweite Steuerglied und gleichzeitiges Trennen der Ausgangswelle von der Eingangswelle durch das erste Steuerglied gebildet.

Das durch ein Umkehrstirnradgetriebe gebildete erfindungsgemäße Reversiergetriebe ermöglicht auf einfache Weise
- eine Umwandlung eines bestehenden Getriebes in ein DHT mit geringem Aufwand,
- eine Generierung elektrischer Leistung zum Laden einer Batterie oder zur Versorgung eines elektrischen Leistungsverbrauchers,
- eine Überlagerung elektrischer Leistung in den Fahrantriebsstrang zur Realisierung hybrider Fahrstrategien,
- einen Gewinn an elektrischer Energie in Folge eines Reversiervorganges,
- eine stufenlose Fahrgeschwindigkeitsregelung, zumindest bei Rückwärtsfahrt.

Gemäß einer weiteren Ausführungsvariante der Erfindung ist vorgesehen, dass das Reversiergetriebe durch ein als Plus-Getriebe ausgebildetes Umkehrplanetengetriebe gebildet ist, welches ein erstes, ein zweites und ein drittes Planetengetriebeelement aus der Gruppe Sonnenrad, Planetenträger und Hohlrad aufweist, wobei das Reversierglied durch zwei in Reihe geschaltete Planetensätze des Planetenträgers gebildet ist, und wobei das erste Planetengetriebeelement mit der Eingangswelle und das zweite Planetengetriebeelement mit der Ausgangswelle drehfest verbunden ist. Der erste Getriebeteil kann dabei durch ein Gehäuse des Reversiergetriebes und der zweite Getriebeteil durch das dritte Planetengetriebeelement des Umkehrplanetengetriebes gebildet sein.

Vorteilhafter Weise ist der - vorzugsweise einem Vorwärtsgang zugeordnete - erste Antriebspfad durch drehfestes Verbinden des ersten und des zweiten Planetengetriebeelementes durch das erste Steuerglied und gleichzeitiges vollständiges oder teilweises Freischalten des dritten Planetengetriebeelementes durch das zweite Steuerglied gebildet, und der - vorzugsweise einem Rückwärtsgang zugeordnete - zweite Antriebspfad durch vollständiges oder teilweises Festhalten des dritten Planetengetriebeelementes durch das zweite Steuerglied und gleichzeitiges Trennen der drehfesten Verbindung zwischen dem ersten und dem zweiten Planetengetriebeelement durch das erste Steuerglied gebildet.

Das durch ein Umkehrplanetengetriebe gebildete Reversiergetriebe ermöglicht auf einfache Weise
- eine Umwandlung eines bestehenden Getriebes in ein DHT mit geringem Aufwand,
- eine Generierung elektrischer Leistung zum Laden einer Batterie oder zur Versorgung eines elektrischen Leistungsverbrauchers,
- eine Überlagerung elektrischer Leistung in den Fahrantriebsstrang zur Realisierung hybrider Fahrstrategien,
- einen Gewinn an elektrischer Energie in Folge eines Reversiervorganges,
- eine stufenlose Fahrgeschwindigkeitsregelung.

Das erfindungsgemäße Verfahren sieht vor, dass im ersten Betriebszustand des durch eine elektrische Maschine gebildeten zweiten Steuergliedes durch die elektrische Maschine ein Antriebs- oder Bremsmoment erzeugt wird und im zweiten Betriebszustand des zweiten Steuergliedes die elektrische Maschine drehmomentfrei geschaltet wird.

Die elektrische Maschine kann in zumindest einem Betriebsbereich des Kraftfahrzeuges bei Vorwärtsfahrt und/oder bei Rückwärtsfahrt generatorisch oder motorisch betrieben werden.

Um einen Betrieb des Kraftfahrzeuges mit hohem Wirkungsgrad zu ermöglichen ist es vorteilhaft, wenn in zumindest einem Betriebsbereich des Kraftfahrzeuges durch die elektrische Maschine der erste Getriebeteil und der zweite Getriebeteil synchronisiert werden und auf eine gemeinsame synchrone Drehzahl gebracht werden, wobei günstigerweise bei Erreichen der synchronen Drehzahl der erste Getriebeteil und der zweite Getriebeteil mechanisch miteinander drehfest verbunden werden. Dies ermöglicht einen starren Durchtrieb zwischen erstem und zweitem Getriebeteil.

Das System baut auf bestehende Reversiergetriebearchitekturen mit beispielsweise Umkehrstirnradgetriebe oder Umkehrplanetengetriebe auf, wie sie etwa in Landmaschinen häufig verwendet werden. Durch das Austauschen eines vorhandenen Kupplungselementes, welches zur Realisierung eines lastschaltbaren Rückwärtsganges benötigt wird, gegen eine elektrische Maschine wird eine Zugkraftregelung auf einfache Weise ermöglicht.

Die Erfindung wird im Folgenden anhand der in den nicht einschränkenden Figuren gezeigten Ausführungsbeispiele näher erläutert. Darin zeigen schematisch:
- Fig. 1: ein erfindungsgemäßes Reversiergetriebe in einer Blockdarstellung;
- Fig. 2: ein erfindungsgemäßes Reversiergetriebe in einer ersten Ausführungsvariante; und
- Fig. 3: ein erfindungsgemäßes Reversiergetriebe in einer zweiten Ausführungsvariante.

Gleiche Teile sind in den Ausführungen mit gleichen Bezugszeichen bezeichnet.

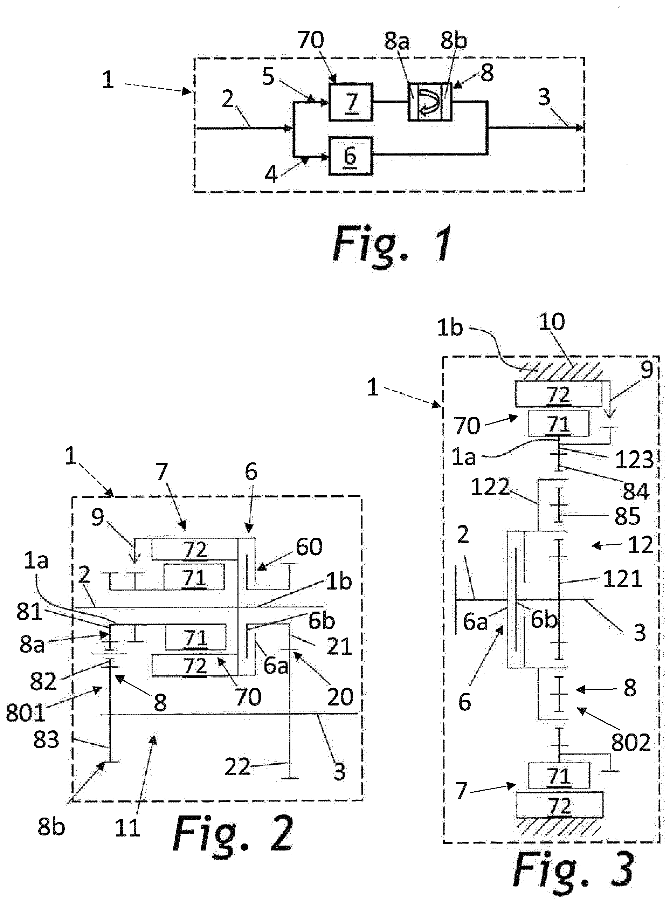

Fig. 1 zeigt schematisch die Hauptelemente eines erfindungsgemäßen Reversiergetriebes 1. Ein Reversiergetriebe 1 weist üblicherweise eine Eingangswelle 2 und eine Ausgangswelle 3 auf, zwischen denen ein erster Antriebspfad 4 für die Vorwärtsfahrt und ein zweiter Antriebspfad 5 für die Rückwärtsfahrt eines Kraftfahrzeuges über ein erstes Steuerglied 6 und ein zweites Steuerglied 7 wahlweise ein- bzw. ausgeschaltet werden können. Zur Umkehrung der Antriebsrichtung der Ausgangswelle 3 ist im zweiten Antriebspfad 5 ein Reversierglied 8 mit einem mittels des zweiten Steuergliedes 7 mit der Eingangswelle 2 drehverbindbaren Antriebselement 81 und einem mit der Ausgangswelle 3 drehfest verbundenen Abtriebselement 82 angeordnet.

Jedes Steuerglied 6, 7 weist zumindest einen ersten und einen zweiten Betriebszustand auf, wobei im ersten Betriebszustand jeweils zwei Getriebeteile 1a, 1b des Reversiergetriebes 1 miteinander drehverbunden und im zweiten Betriebszustand voneinander getrennt sind. Der erste Betriebszustand des ersten Steuergliedes 6 ist der Aktivierung eines ersten Antriebspfades 4, der erste Betriebszustand des zweiten Steuergliedes 7 ist der Aktivierung des zweiten Antriebspfades 5, der zweite Betriebszustand des ersten Steuergliedes 7 ist der Deaktivierung des ersten Antriebspfades 4 und der zweite Betriebszustand des zweiten Steuergliedes 7 ist der Deaktivierung des zweiten Antriebspfades 5 zugeordnet.

Das erste Steuerglied 6 kann beispielsweise durch eine Wellenkupplung 60, etwa die Hauptfahrkupplung des Kraftfahrzeuges, gebildet sein, wobei ein erster Kupplungsteil 6a mit der Eingangswelle 2 und ein zweiter Kupplungsteil 6b mit der Ausgangswelle 3 drehfest verbunden sind. Im ersten Betriebszustand werden der erste 6a und der zweite Kupplungsteil 6b aneinander gekuppelt und somit miteinander drehverbunden. Das zweite Steuerglied 7 ist gemäß der vorliegenden Erfindung durch eine elektrische Maschine 70 gebildet, was das Reversiergetriebe 1 zu einem dezidierten Hybridgetriebe (DHT) macht. Die elektrische Maschine 70 weist zwei konzentrisch angeordnete Maschinenteile 71, 72 aus der Gruppe Rotor und Stator auf, wobei ein als Rotor ausgebildeter erster Maschinenteil 71 mit einem ersten Getriebeteil 1a des Reversiergetriebes 1 und ein als drehbarer Stator ausgebildeter zweiter Maschinenteil 72 mit einem zweiten Getriebeteil 1b des Reversiergetriebes 1 drehfest verbunden ist.

Neben der reinen Umschaltfunktion zwischen Vorwärtsfahrt und Rückwärtsfahrt kann die elektrische Maschine 70 einerseits zur Erzeugung elektrischer Leistung verwendet werden. Andererseits können hybride Fahrstrategien realisiert werden, indem die elektrische Leistung der elektrischen Maschine 70 dem durch den ersten Antriebsstrang 4 oder den zweiten Antriebsstrang 5 gebildeten jeweiligen Hauptantrieb überlagert wird.

Die Erfindung kann günstigerweise bei konstruktiv unterschiedlich ausgebildeten Reversiergetrieben 1, insbesondere bei als Umkehrstirnradgetriebe 11 (Fig. 2) und bei als Umkehrplanetengetriebe 12 (Fig. 3) ausgebildeten Reversiergetrieben 1, eingesetzt werden.

### 1. Umkehrstirnradaetriebe (Fia. 2)

Fig. 2 zeigt ein als Umkehrstirnradgetriebe 11 ausgebildetes Reversiergetriebe 1, wobei das Reversierglied 8 durch eine Reversierstirnradanordnung 801 mit einer ungeraden Anzahl - hier drei - von in Reihe antriebsmäßig nacheinander angeordneten, miteinander im Zahneingriff stehenden Stirnrädern gebildet ist, wobei das Antriebselement 8a und das Abtriebselement 8b des Reversiergliedes 8 als Endstirnräder 81, 83 ausgebildet sind, welche mit zumindest einem zwischen den beiden Endstirnrädern 81, 83 angeordneten Zwischenzahnrad 82 im Zahneingriff stehen. Als Endstirnräder 81, 83 sind hier das erste und das letzte Stirnrad der Reihe von antriebsmäßig nacheinander angeordneten Stirnrädern zu verstehen.

Der erste Getriebeteil 1a ist hier durch das Antriebselement 8a des Reversiergliedes 8 und der zweite Getriebeteil 1b durch die Eingangswelle 2 gebildet.

Für die Vorwärtsfahrt kann die Eingangswelle 2 mittels des ersten Steuergliedes 6 über eine Vorwärtsstirnradanordnung 20 mit gerader Anzahl an Stirnrädern 21, 22 mit der Ausgangswelle 3 verbunden werden.

Analog zur DE 10 2016 2007 52 A1 ist das erste Steuerglied 6 - welches eine Hautfahrkupplung für Vorwärtsfahrt darstellt - ausgebildet, um die Eingangswelle 2 und die Ausgangswelle 3 direkt miteinander zu verbinden. Die in Fig. 2 gezeigte erste Ausführungsvariante der Erfindung unterscheidet sich von dem aus der DE 10 2016 2007 52 A1 bekannten Reversiergetriebe dadurch, dass an Stelle einer Rückwärtsfahrkupplung die elektrische Maschine 70 vorgesehen ist, deren durch einen Rotor gebildeter erster Maschinenteil 71 mit dem Antriebselement 8a des Reversiergliedes 8 und deren zweiter Maschinenteil 72 mit der Eingangswelle 2 drehfest verbunden ist.

Der beispielsweise einem Vorwärtsgang des Kraftfahrzeuges zugeordnete erste Antriebspfad 4 wird durch das drehfeste Verbinden der Eingangswelle 2 mit der Ausgangswelle 3 durch das erste Steuerglied 6 und das gleichzeitige vollständige oder teilweise Trennen des Antriebselementes 8a des Reversiergliedes 8 von der Eingangswelle 2 durch das zweite Steuerglied 7 - die elektrische Maschine 70 - gebildet. Der beispielsweise einem Rückwärtsgang des Kraftfahrzeugs zugeordnete zweite Antriebspfad 5 wird durch vollständiges oder teilweises drehfestes Verbinden der Eingangswelle 2 mit dem Antriebselement 8a des Reversiergliedes 8 durch das zweite Steuerglied 7 und gleichzeitiges Trennen der Ausgangswelle 3 von der Eingangswelle 2 durch das erste Steuerglied 6 gebildet.

Weiters kann eine beispielsweise durch eine Feststellbremse gebildete mechanische Koppelvorrichtung 9 vorgesehen sein, um den ersten Getriebeteil 1a bzw. den ersten Maschinenteil 71 und den zweiten Getriebeteil 1b bzw. den zweiten Maschinenteil 72 bei synchroner Drehzahl in zumindest einem Betriebsbereich des Kraftfahrzeuges miteinander zu verbinden. Nach erfolgtem Synchronisieren der Maschinenteile 71, 72 der elektrischen Maschine 70 kann im Falle eines Reversiervorganges durch die mechanische Koppelvorrichtung 9 ein Aufrechthalten des Fahrzustandes auch ohne elektrische Leistung erfolgen.

Mit dem in Fig. 2 dargestellten Reversiergetriebe 1 lassen sich folgende Betriebsmodi realisieren:
1.1 Generierung elektrischer Leistung
1.2 Überlagern elektrischer Leistung
1.3 Gewinn elektrischer Leistung in Folge eines Reversiervorganges
1.4 Stufenlose Fahrgeschwindigkeitsregelung

### 1.1 Generierung elektrischer Leistung

Über die elektrische Maschine 70 kann während des Betriebes des Kraftfahrzeugs sowohl bei Vorwärtsfahrt, als auch bei Rückwärtsfahrt elektrische Energie generiert werden.

Im Falle der Vorwärtsfahrt dreht der durch einen Rotor gebildete erste Maschinenteil 71 der elektrischen Maschine 70 proportional zur Ausgangswelle 3, während der durch einen drehenden Stator gebildete zweite Maschinenteil 72 mit gleicher Drehzahl wie die Eingangswelle 2 dreht. Wird beispielsweise für die Versorgung von elektrischen Verbrauchern oder zum Laden einer Batterie elektrische Leistung benötigt, generiert die elektrische Maschine 70 ein Bremsmoment über die Reversierstirnradanordnung 801, welches vom restlichen Antriebsstrang abgestützt werden muss.

Im Falle der Rückwärtsfahrt ist zur Realisierung eines Übersetzungsverhältnisses von ungefähr i=-1 zwischen der Eingangswelle 2 und der Ausgangswelle 3 eine Synchronisierung des ersten Maschinenteils 71 und des zweiten Maschinenteils 72 der elektrischen Maschine 70 notwendig. Zur Generierung elektrischer Leistung wird so weit von diesem Zustand abgewichen, dass sich zwischen dem ersten Maschinenteil 71 und dem zweiten Maschinenteil 72 eine Drehzahl in gerade dem Maße einstellt, dass der Bedarf an elektrischer Leistung für das restliche System gedeckt ist. Das Drehmoment, das durch die elektrische Maschine 70 aufgebracht werden muss, ist dabei direkt vom Antriebsmoment des restlichen Antriebsstranges abhängig.

### 1.2 Überlagern elektrischer Leistung

Über die elektrische Maschine 70 kann während des Betriebes des Kraftfahrzeugs sowohl bei Vorwärtsfahrt, als auch bei Rückwärtsfahrt ein Drehmoment dem Antriebsdrehmoment überlagert werden.

Im Falle der Vorwärtsfahrt dreht der durch den Rotor gebildete erste Maschinenteil 71 proportional zur Ausgangswelle 3. Wird für Fahraufgaben, wie beispielsweise einem elektrischen Boost, elektrische Leistung benötigt, überlagert die elektrische Maschine 70 ein Antriebsmoment über die Reversierstirnradanordnung 801, welches dem restlichen Antriebsstrang aufaddiert wird.

Im Falle der Rückwärtsfahrt ist zur Realisierung eines Übersetzungsverhältnisses von ungefähr i=-1 zwischen dem Antrieb und dem Abtrieb eine Synchronisierung des ersten Maschinenteils 71 mit dem zweiten Maschinenteil 72 notwendig. Zur Überlagerung elektrischer Leistung wird so weit von diesem Zustand abgewichen, dass sich zwischen dem ersten Maschinenteil 71 und dem zweiten Maschinenteil 72 eine Drehzahl in gerade dem Maße einstellt, dass der Bedarf an elektrischer Leistung für das Antriebssystem gedeckt ist. Das Drehmoment, das durch die elektrische Maschine 70 aufgebracht werden muss, ist dabei direkt vom Antriebsmoment des restlichen Antriebsstranges abhängig.

### 1.3 Gewinn von elektrischer Leistung in Folge eines Reversiervorganges

Anstatt die Rückwärtsbremse zwecks Reversierens wie bei konventionellen Systemen verlustbehaftet mit einer Kupplung zu synchronisieren, geschieht dieser Vorgang über die elektrische Maschine 70, wodurch elektrische Energie im Zuge einer Rekuperation generiert wird. Diese Energie kann beispielsweise anderen Verbrauchern zugeführt oder zum Laden einer Batterie genutzt werden. In letzterem Fall kann die Energie somit später wieder in das System eingebracht werden.

Beim Ändern der Fahrtrichtung von der Rückwärts- in die Vorwärtsfahrt kann auf gleiche Weise das entgegengesetzte Beschleunigen der Ausgangswelle 3 über die elektrische Maschine 70 unterstützt werden. Der Reversiervorgang kann somit, unterstützend zu dem ersten Steuerglied 6 optimiert werden, was sich auf die Agilität des Kraftfahrzeuges vorteilhaft auswirkt.

### 1.4 Stufenlose Fahrgeschwindigkeitsregelung:

Bei Vorwärtsfahrt ist bei geöffneten ersten Steuerglied 6 durch die elektrische Maschine 70 eine stufenlose Fahrgeschwindigkeitsregelung technisch möglich, allerdings muss in diesem Fall die elektrische Maschine 70 die doppelte Antriebsleistung übertragen, um die Drehrichtungsumkehr ausgleichen zu können. Dieser Betrieb ist daher eher für kurze Zeiträume geeignet.

Eine stufenlose Fahrgeschwindigkeitsregelung ist dagegen bei Rückwärtsfahrt problemlos möglich: Da bei der Rückwärtsfahrt ohnehin das erste Steuerglied 6 geöffnet ist, unterscheidet sich dieser Modus nur gering vom normalen Rückwärtsfahrbetrieb (siehe 1.1, 1.2). Der erste Maschinenteil 71 der elektrischen Maschine 70 wird dazu aktiv im Bereich um den Stillstand - mit anderen Worten im Bereich gleicher Drehzahl der beiden elektrischen Maschinenteile 71, 72 - betrieben.

### 2. Umkehrplanetengetriebe (Fig. 3)

Fig. 3 zeigt ein Reversiergetriebe 1, welches durch ein als Plus-Getriebe ausgebildetes Umkehrplanetengetriebe 12 gebildet ist. Das Umkehrplanetengetriebe 12 weist ein erstes, ein zweites und ein drittes Planetengetriebeelement 121, 122,123 aus der Gruppe Sonnenrad, Planetenträger und Hohlrad auf. Das Reversierglied 8 ist durch eine Planetenradanordnung 802 mit zwei in Reihe geschalteten Planetensätzen 84, 85 des Planetenträgers 12 des Planetenumkehrgetriebes 12 gebildet. Das erste Planetengetriebeelement 121 - hier das Sonnenrad des Planetenumkehrgetriebes 12 - ist mit der Eingangswelle 2 und das zweite Planetengetriebeelement 122 - hier der Planetenträger - ist mit der Ausgangswelle 3 drehfest verbunden. Der erste Getriebeteil 1a des Reversiergetriebes 1 ist in diesem Ausführungsbeispiel durch das dritte Planetengetriebeelement 123 - hier das Hohlrad - des Umkehrplanetengetriebes 12 und der zweite Getriebeteil 1b durch das Gehäuse 10 des Reversiergetriebes 1 gebildet.

Analog zur DE 1862674 U ist das - als Hautfahrkupplung fungierende - erste Steuerglied 6 ausgebildet, um die Eingangswelle 2 und die Ausgangswelle 3 direkt miteinander zu verbinden und das hier durch ein Sonnenrad gebildete erste Planetengetriebeelement 121 mit dem als Planetenträger ausgebildeten zweiten Planetengetriebeelement 122 drehfest zu verbunden, sodass das Umkehrplanetengetriebe 12 in einen Blockumlauf gezwungen werden kann. Die in Fig. 3 gezeigte zweite Ausführungsvariante der Erfindung unterscheidet sich von dem aus der DE 1862674 U bekannten Reversiergetriebe dadurch, dass - an Stelle einer das Hohlrad festhaltenden Bremse - die elektrische Maschine 70 vorgesehen ist, deren durch einen Rotor gebildeter erster Maschinenteil 71 mit dem Hohlrad drehfest verbunden und deren durch einen Stator gebildeter zweiter Maschinenteil 72 gehäusefest ausgebildet ist.

Der beispielsweise einem Vorwärtsgang zugeordnete erste Antriebspfad 4 wird durch drehfestes Verbinden des ersten 121 und des zweiten Planetengetriebeelementes 122 durch das erste Steuerglied 6 und gleichzeitiges vollständiges oder teilweises Freischalten des dritten Planetengetriebeelementes 123 durch das durch die elektrische Maschine 70 gebildete zweite Steuerglied 7 realisiert. Der beispielsweise einem Rückwärtsgang zugeordnete zweite Antriebspfad 5 wird durch vollständiges oder teilweises Festhalten des dritten Planetengetriebeelementes 123 durch das zweite Steuerglied 7 und gleichzeitiges Trennen der drehfesten Verbindung zwischen dem ersten 121 und dem zweiten Planetengetriebeelement 122 durch das erste Steuerglied 6 gebildet.

Weiters kann auch in dieser Ausführungsvariante eine beispielsweise durch eine Feststellbremse gebildete mechanische Koppelvorrichtung 9 vorgesehen sein, um den ersten Maschinenteil 71 bzw. ersten Getriebeteil 1a mit dem zweiten Maschinenteil 72 bzw. dem zweiten Getriebeteil 1b, also dem Gehäuse 10 des Reversiergetriebes 1 bei synchroner Drehzahl in zumindest einem Betriebsbereich des Kraftfahrzeuges miteinander zu verbinden. Nach erfolgtem Abbremsen der elektrischen Maschine 70 kann im Falle eines Reversiervorganges durch die mechanische Koppelvorrichtung 9 ein Aufrechthalten des Fahrzustandes auch ohne elektrische Leistung erfolgen.

Mit dem in Fig. 3 dargestellten Reversiergetriebe 1 lassen sich folgende Betriebsmodi realisieren:
2.1 Generierung elektrischer Leistung
2.2 Überlagern elektrischer Leistung
2.3 Gewinn elektrischer Leistung in Folge eines Reversiervorganges
2.4 Stufenlose Fahrgeschwindigkeitsregelung

### 2.1 Generierung elektrischer Leistung

Über die elektrische Maschine 70 kann während des Betriebes des Kraftfahrzeugs sowohl bei Vorwärtsfahrt als auch bei Rückwärtsfahrt elektrische Energie generiert werden.

Im Falle der Vorwärtsfahrt dreht der durch einen Rotor gebildete erste Maschinenteil 71 der elektrischen Maschine 70 mit gleicher Drehzahl wie die Eingangswelle 2 und die Ausgangswelle 3, während der durch einen stillstehenden Stator gebildete zweite Maschinenteil 72 feststeht.

Wird beispielsweise für die Versorgung von elektrischen Verbrauchern oder zum Laden einer Batterie elektrische Leistung benötigt, generiert die elektrische Maschine 70 ein Bremsmoment über das beispielsweise durch ein Hohlrad gebildete dritte Planetengetriebeelement 123, welches vom restlichen Antriebsstrang abgestützt werden muss. Die elektrische Maschine 70 befindet sich dabei in einer mit einem P2-Hybridsystems vergleichbaren Anordnung.

Im Falle der Rückwärtsfahrt ist zur Realisierung eines Übersetzungsverhältnisses von ungefähr i=-1 ein Stillstand des dritten Planetengetriebeelementes 123, also beispielsweise des Hohlrades, notwendig. Zur Generierung elektrischer Leistung wird so weit von diesem Zustand abgewichen, dass sich zwischen dem dritten Planetengetriebeelement 123 bzw. dem ersten Maschinenteil 71 und dem Gehäuse 10 bzw. dem zweiten Maschinenteil 72 eine Drehzahl in gerade dem Maße einstellt, dass der Bedarf an elektrischer Leistung für das restliche System gedeckt ist. Das Drehmoment, das durch die elektrische Maschine 70 aufgebracht werden muss, ist dabei direkt vom Antriebsmoment des restlichen Antriebsstranges abhängig.

### 2.2 Überlagern elektrischer Leistung

Über die elektrische Maschine 70 kann während des Betriebes des Kraftfahrzeugs sowohl bei Vorwärtsfahrt, als auch bei Rückwärtsfahrt ein Drehmoment dem Antriebsdrehmoment überlagert werden.

Im Falle der Vorwärtsfahrt dreht der durch den Rotor gebildete erste Maschinenteil 71 mit gleicher Drehzahl wie die Eingangswelle 2 und die Ausgangswelle 3. Wird für Fahraufgaben, wie beispielsweise einem elektrischen Boost, elektrische Leistung benötigt, überlagert die elektrische Maschine 70 über das Planetengetriebeelement 123 ein Antriebsmoment, welches dem restlichen Antriebsstrang aufaddiert wird. Die elektrische Maschine 70 befindet sich dabei in einer mit einem P2-Hybridsystems vergleichbaren Anordnung.

Im Falle der Rückwärtsfahrt ist zur Realisierung eines Übersetzungsverhältnisses von ungefähr i=-1 zwischen dem Antrieb - der Eingangswelle 2 - und dem Abtrieb - der Ausgangswelle 3 - ein Stillstand des dritten Planetengetriebeelementes 123, also beispielsweise des Hohlrades, notwendig. Zur Überlagerung elektrischer Leistung wird so weit von diesem Zustand abgewichen, dass sich zwischen dem dritten Planetengetriebeelement 123 bzw. dem ersten Maschinenteil 71 und dem Gehäuse 10 bzw. dem zweiten Maschinenteil 72 eine Drehzahl in gerade dem Maße einstellt, dass der Bedarf an elektrischer Leistung für das Antriebssystem gedeckt ist. Das Drehmoment, das durch die elektrische Maschine 70 aufgebracht werden muss, ist dabei direkt vom Antriebsmoment des restlichen Antriebsstranges abhängig.

### 2.3 Gewinn von elektrischer Leistung in Folge eines Reversiervorganges

Anstatt das etwa durch ein Hohlrad gebildete dritte Planetengetriebeelement 123 zwecks Reversierens wie bei konventionellen Systemen verlustbehaftet mit einer Bremse abzubremsen, geschieht dieser Vorgang gemäß der vorliegenden Erfindung über die elektrische Maschine 70, wodurch elektrische Energie im Zuge einer Rekuperation generiert wird. Diese Energie kann beispielsweise anderen Verbrauchern zugeführt oder zum Laden einer Batterie genutzt werden. In letzterem Fall kann die Energie somit später wieder in das System eingebracht werden.

Beim Ändern der Fahrtrichtung von der Rückwärts- in die Vorwärtsfahrt kann auf gleiche Weise das entgegengesetzte Beschleunigen des beispielsweise durch ein Hohlrad gebildeten dritten Planetengetriebeelementes 123 über die elektrische Maschine 70 unterstützt werden. Der Reversiervorgang kann somit, unterstützend zu dem ersten Steuerglied 6 optimiert werden, was sich auf die Agilität des Kraftfahrzeuges vorteilhaft auswirkt.

### 2.4 Stufenlose Fahrgeschwindigkeitsregelung:

Durch die Ausbildung des Reversiergetriebes 1 als Planetenumkehrgetriebe 12 kann sowohl bei Vorwärtsfahrt, als auch bei Rückwärtsfahrt nicht nur ein Drehmoment, sondern auch eine Drehzahl überlagert werden.

Bei Vorwärtsfahrt muss zwecks variabler, von der Motordrehzahl unabhängiger, Anpassung der Fahrgeschwindigkeit des Kraftfahrzeuges die durch das erste Steuerglied 6 gebildete Hauptfahrkupplung geöffnet werden, so dass das Umkehrplanetengetriebe 12 in seiner nicht-geblockten Funktion arbeiten kann. Über die Drehzahl des durch den Rotor gebildeten ersten Maschinenteils 71 und somit des beispielsweise durch ein Hohlrad gebildeten dritten Planetengetriebeelementes 123 wird die Antriebsdrehzahl des beispielsweise durch einen Planetenträger gebildeten zweiten Getriebeelements 122 überlagert und folglich die Abtriebsdrehzahl des beispielsweise durch ein Sonnenrad gebildeten ersten Getriebeelements 121 angepasst. Hierzu ist die benötigte elektrische Energie von außen in das System einzubringen, beispielsweise durch eine Batterie oder eine weitere generatorische Einheit. Der erste Maschinenteil 71 muss dazu aktiv im Bereich der Eingangsdrehzahl betrieben werden.

Da bei der Rückwärtsfahrt ohnehin das erste Steuerglied 6 geöffnet ist, unterscheidet sich dieser Modus nur gering vom normalen Rückwärtsfahrbetrieb (siehe 2.1, 2.2). Der erste Maschinenteil 71 der elektrischen Maschine 70 wird dazu aktiv im Bereich um den Stillstand betrieben.

Mit der Erfindung können insbesondere folgende Vorteile erreicht werden:
- Umwandlung eines bestehenden Getriebes in ein DHT mit geringem Aufwand.
- Generierung elektrischer Leistung zum Laden einer Batterie oder zur Versorgung eines elektrischen Leistungsverbrauchers
- Überlagerung elektrischer Leistung in den Fahrantriebsstrang zur Realisierung hybrider Fahrstrategien
- Gewinn elektrischer Energie in Folge eines Reversiervorganges
- Je nach Getriebesystem: Möglichkeit der stufenlosen Fahrgeschwindigkeitsregelung

## Patentansprüche

1. Reversiergetriebe (1) für ein Kraftfahrzeug mit einer Eingangswelle (2) und einer Ausgangswelle (3), wobei zwischen der Eingangswelle (2) und der Ausgangswelle (3) zwei - insbesondere alternative - Antriebspfade (4, 5) mit entgegengesetzten Antriebdrehrichtungen ausgebildet sind, welche Antriebspfade (4, 5) durch ein erstes Steuerglied (6) und ein zweites Steuerglied (7) jeweils aktivierbar oder deaktivierbar sind, wobei jedes Steuerglied (6, 7) zumindest einen ersten und einen zweiten Betriebszustand aufweist und im ersten Betriebszustand jeweils zwei Getriebeteile (1a, 1b) des Reversiergetriebes (1) miteinander drehverbunden und im zweiten Betriebszustand voneinander getrennt sind, wobei der erste Betriebszustand des ersten Steuergliedes (6) der Aktivierung eines ersten Antriebspfades (4), der erste Betriebszustand des zweiten Steuergliedes (7) der Aktivierung des zweiten Antriebspfades (5), der zweite Betriebszustand des ersten Steuergliedes (6) der Deaktivierung des ersten Antriebspfades (4) und der zweite Betriebszustand des zweiten Steuergliedes (7) der Deaktivierung des zweiten Antriebspfades (5) zugeordnet sind, wobei zur Umkehrung der Antriebsrichtung im zweiten Antriebspfad (5) ein - ein Antriebselement (8a) und ein Abtriebselement (8b) - aufweisendes Reversierglied (8) so angeordnet ist, dass entweder das Antriebselement (8a) mittels des zweiten Steuergliedes (7) mit der Eingangswelle (2) drehverbindbar und das Abtriebselement (8b) mit der Ausgangswelle (3) drehfest verbunden ist, oder das Antriebselement (8a) mit der Eingangswelle (2) drehfest verbunden und das Abtriebselement (8b) mittels des zweiten Steuergliedes (7) mit der Ausgangswelle (3) drehverbindbar ist, **dadurch gekennzeichnet, dass** zumindest ein Steuerglied (7) durch eine elektrische Maschine (70) gebildet ist.

2. Reversiergetriebe (1) nach Anspruch 1, **dadurch gekennzeichnet, dass** das erste Steuerglied (6) durch eine Wellenkupplung (60) mit zwei miteinander kuppelbaren Kupplungsteilen (6a, 6b) gebildet ist, wobei ein erster Kupplungsteil (6a) mit der Eingangswelle (2) und ein zweiter Kupplungsteil (6b) mit der Ausgangswelle (3) drehfest verbunden ist, und dass das zweite Steuerglied (7) durch die elektrische Maschine (70) gebildet ist, welche zwei konzentrisch angeordnete Maschinenteile (71, 72) aus der Gruppe Rotor und Stator aufweist, wobei ein erster Maschinenteil (71) - vorzugsweise ein Rotor der elektrischen Maschine (70) - mit einem ersten Getriebeteil (1a) des Reversiergetriebes (1) und ein zweiter Maschinenteil (72) mit einem zweiten Getriebeteil (1b) des Reversiergetriebes (1) drehfest verbunden ist.

3. Reversiergetriebe (1) nach Anspruch 2, **dadurch gekennzeichnet, dass** der erste Getriebeteil (1a) und/oder erster Maschinenteil (71) durch eine mechanische Koppelvorrichtung (9) mit dem zweiten Getriebeteil (1b) und/oder dem zweiten Maschinenteil (2) - vorzugsweise bei synchroner Drehzahl - in zumindest einem Betriebsbereich des Kraftfahrzeuges miteinander verbindbar ist/sind.

4. Reversiergetriebe (1) nach einem der Ansprüche 1 bis 3, **dadurch gekennzeichnet, dass** das Reversiergetriebe (1) als Umkehrstirnradgetriebe (11) ausgebildet ist, wobei das Reversierglied (8) durch eine Reversierstirnradanordnung (801) mit einer ungeraden Anzahl von in Reihe antriebsmäßig nacheinander angeordneten und miteinander in Zahneingriff stehenden Stirnrädern (81, 82, 83) gebildet ist, wobei das Antriebselement (8a) und das Abtriebselement (8b) durch Endstirnräder (81, 83) gebildet sind, welche mit zumindest einem zwischen den beiden Endstirnrädern angeordneten Zwischenzahnrad (82) im Zahneingriff stehen.

5. Reversiergetriebe (1) nach Anspruch 4, **dadurch gekennzeichnet, dass** der erste Getriebeteil (1a) durch das Antriebselement (8a) des Reversiergliedes (8) und der zweite Getriebeteil (1b) durch die Eingangswelle (2) gebildet ist.

6. Reversiergetriebe (1) nach Anspruch 4 oder 5, **dadurch gekennzeichnet, dass** der - vorzugsweise einem Vorwärtsgang zugeordnete - erste Antriebspfad (4) durch drehfestes Verbinden der Eingangswelle (2) mit der Ausgangswelle (3) durch das erste Steuerglied (6) und gleichzeitiges vollständiges oder teilweises Trennen des Antriebselementes (8a) des Reversiergliedes (8) von der Eingangswelle (2) durch das zweite Steuerglied (7) gebildet ist, und dass der - vorzugsweise einem Rückwärtsgang zugeordnete - zweite Antriebspfad (5) durch vollständiges oder teilweises drehfestes Verbinden der Eingangswelle (2) mit dem Antriebselement (8a) des Reversiergliedes (8) durch das zweite Steuerglied (7) und gleichzeitiges Trennen der Ausgangswelle (3) von der Eingangswelle (2) durch das erste Steuerglied (6) gebildet ist.

7. Reversiergetriebe (1) nach einem der Ansprüche 1 bis 6, **dadurch gekennzeichnet, dass** das Reversiergetriebe (1) durch ein als Plus-Getriebe ausgebildetes Umkehrplanetengetriebe (12) gebildet ist, welches ein erstes (121), ein zweites (122) und ein drittes Planetengetriebeelement (123) aus der Gruppe Sonnenrad, Planetenträger und Hohlrad aufweist, wobei das Reversierglied (8) durch zwei in Reihe geschaltete Planetensätze (84, 85) des Planetenträgers gebildet ist, und wobei das erste Planetengetriebeelement (121) mit der Eingangswelle (2) und das zweite Planetengetriebeelement (122) mit der Ausgangswelle (3) drehfest verbunden ist.

8. Reversiergetriebe (1) nach Anspruch 7, **dadurch gekennzeichnet, dass** der erste Getriebeteil (1a) durch das dritte Planetengetriebeelement (123) des Umkehrplanetengetriebes (12) und der zweite Getriebeteil (1b) durch ein Gehäuse (10) des Reversiergetriebes (1) gebildet ist.

9. Reversiergetriebe (1) nach Anspruch 7 oder 8, **dadurch gekennzeichnet, dass** der - vorzugsweise einem Vorwärtsgang zugeordnete - erste Antriebspfad (4) durch drehfestes Verbinden des ersten (121) und des zweiten Planetengetriebeelementes (122) durch das erste Steuerglied (6) und gleichzeitiges vollständiges oder teilweises Freischalten des dritten Planetengetriebeelementes (123) durch das zweite Steuerglied (122) gebildet ist, und dass der - vorzugsweise einem Rückwärtsgang zugeordnete - zweite Antriebspfad (5) durch vollständiges oder teilweises Festhalten des dritten Planetengetriebeelementes (123) durch das zweite Steuerglied (7) und gleichzeitiges Trennen der drehfesten Verbindung zwischen dem ersten (121) und dem zweiten Planetengetriebeelement (122) durch das erste Steuerglied (6) gebildet ist.

10. Verfahren zum Betreiben eines Reversiergetriebes (1) mit zwei zwischen einer Eingangswelle (2) und einer Ausgangswelle (3) insbesondere alternativ aktivierbaren Antriebspfaden (4, 5) mit entgegengesetzten Antriebdrehrichtungen, wobei für die Aktivierung des ersten Antriebspfades (4) das erste Steuerglied (6) in einen die Eingangswelle (2) und die Ausgangswelle (3) drehfest verbindenden ersten Betriebszustand und das zweite Steuerglied (7) in einen den ersten Getriebeteil (1a) und den zweiten Getriebeteil (1b) des Reversiergetriebes (1) trennenden zweiten Betriebszustand gebracht wird, und wobei für die Aktivierung des zweiten Antriebspfades (5) das erste Steuerglied (6) in einen die Eingangswelle (2) und die Ausgangswelle (3) trennenden zweiten Betriebszustand und das zweite Steuerglied (7) in einen den ersten Getriebeteil (1a) und den zweiten Getriebeteil (1b) des Reversiergetriebes (1) drehfest verbindenden ersten Betriebszustand gebracht wird, nach einem der Ansprüche 1 bis 9, **dadurch gekennzeichnet, dass** im ersten Betriebszustand des durch eine elektrische Maschine (70) gebildeten zweiten Steuergliedes (7) durch die elektrische Maschine (70) ein Antriebs- oder Bremsmoment erzeugt wird und im zweiten Betriebszustand des zweiten Steuergliedes (7) die elektrische Maschine (70) drehmomentfrei geschaltet wird.

11. Verfahren nach Anspruch 10, **dadurch gekennzeichnet, dass** die elektrische Maschine (70) in zumindest einem Betriebsbereich des Kraftfahrzeuges bei Vorwärtsfahrt generatorisch betrieben wird.

12. Verfahren nach Anspruch 10 oder 11, **dadurch gekennzeichnet, dass** die elektrische Maschine (70) in zumindest einem Betriebsbereich des Kraftfahrzeuges bei Vorwärtsfahrt motorisch betrieben wird.

13. Verfahren nach einem der Ansprüche 10 bis 12, **dadurch gekennzeichnet, dass** die elektrische Maschine (70) in zumindest einem Betriebsbereich des Kraftfahrzeuges bei Rückwärtsfahrt generatorisch betrieben wird.

14. Verfahren nach einem der Ansprüche 10 bis 13, **dadurch gekennzeichnet, dass** die elektrische Maschine (70) in zumindest einem Betriebsbereich des Kraftfahrzeuges bei Rückwärtsfahrt motorisch betrieben wird.

15. Verfahren nach einem der Ansprüche 10 bis 14, **dadurch gekennzeichnet, dass** in zumindest einem Betriebsbereich des Kraftfahrzeuges durch die elektrische Maschine (70) der erste Getriebeteil (1a) und der zweite Getriebeteil (1b) synchronisiert werden und auf eine gemeinsame synchrone Drehzahl gebracht werden, wobei vorzugsweise bei Erreichen der synchronen Drehzahl der erste Getriebeteil (1a) und der zweite Getriebeteil (1b) mechanisch miteinander drehfest verbunden werden.
